# EUROPEAN PATENT APPLICATION

(11) **EP 4 035 924 A1**
(43) Date of publication of application: **03.08.2022**
(21) Application number: 20867178.4
(22) Date of filing: 31.08.2020
(51) Int. Cl.: B60L 5/00, H01H 33/66, H01H 33/662

(54) **RAILROAD VEHICLE SWITCH AND METHOD FOR MANUFACTURING SAME**

(30) Priority: 24.09.2019 JP 2019173219
(71) Applicant: HITACHI INDUSTRIAL EQUIPMENT SYSTEMS CO., LTD., Tokyo 101-0022 (JP)
(72) Inventor: KONO, Tsutomu, Tokyo 100-8280 (JP); KOBAYASHI, Masato, Tokyo 101-0022 (JP); TAMURA, Kozo, Tokyo 101-0022 (JP); NAKATSUCHI, Hiroki, Tokyo 100-8280 (JP)
(74) Representative: MERH-IP Matias Erny Reichl Hoffmann Patentanwälte PartG mbB
(86) International application number: PCT/JP2020/032855
(87) International publication number: WO 2021/059875

(57) **Abstract**

The present invention provides a railroad vehicle switch that realizes a weight reduction from the viewpoint of a restriction on load carrying capacity, and a method for manufacturing the same. In order to solve the above problem, a railroad vehicle switch includes a vacuum interrupter including a fixed electrode and a movable electrode that comes into contact with or separates from the fixed electrode; a fixed conductor connected to the fixed electrode; a first bushing conductor electrically connected to the fixed conductor; a movable conductor connected to the movable electrode; a second bushing conductor electrically connected to the movable conductor; an air insulation operating rod disposed coaxially with the movable conductor; a solid insulating member being made of a thermosetting resin and covering the vacuum interrupter and the first and second bushing conductors; and a structure member being made of a thermoplastic resin and being joined to a portion of the solid insulating member forming an air insulation space in a peripheral portion of the air insulation operating rod. A part of the air insulation space is formed in a space formed by the solid insulating member made of the thermosetting resin and the structure member made of the thermoplastic resin.

## Description

### TECHNICAL FIELD

The present invention relates to a switch to be mounted in a railroad vehicle.

### BACKGROUND ART

A switch mounted in a railroad vehicle is disposed on a roof of or under a floor of the railroad vehicle. Then, the switch, particularly the weight and the product dimensions thereof are limited from the viewpoints of a restriction on load carrying capacity, a reduction in air resistance, restrictions on vehicle height when passing through a tunnel and on roof and underfloor spaces, and the like.

For example, Patent Document 1 describes a railroad vehicle switch. For the purpose of providing a railroad vehicle switch that can be reduced in height dimension and in width dimension and that is not restricted by an installation location, Patent Document 1 discloses a configuration in which the height dimension and the width dimension are suppressed by placing a product longitudinal direction along a vehicle traveling direction, by disposing a bushing connecting cables on any one of upper, lower, right, and left sides perpendicular to the vehicle traveling direction, and by disposing an operation mechanism case on a substantially straight line with respect to the switch.

According to this configuration, the height dimension and the width dimension can be suppressed, while insulation is required between the switch and an operation mechanism arranged on substantially a straight line, so that the switch and the operation mechanism are kept away from each other by disposing an air insulation operating rod therebetween, the air insulation operating rod connecting the switch and the operation mechanism. In addition, an increase in the dimension of the air insulation operating rod is required so as to lengthen an insulation distance, but in that case, the accuracy of centering is reduced and the smoothness of switch operation is impaired, which is a concern. Therefore, in Patent Document 1, a movable shaft including the air insulation operating rod is supported by two bearings to improve the accuracy of centering of the air insulation operating rod and to realize a smooth operation of the switch.

### CITATION LIST

### PATENT DOCUMENT

Patent Document 1: JP 2018-137862 A

### SUMMARY OF THE INVENTION

### PROBLEMS TO BE SOLVED BY THE INVENTION

Patent Document 1 relates to a structure in which the height dimension and the width dimension can be reduced, but a weight reduction required for the railroad vehicle is not taken into consideration.

Therefore, an object of the present invention is to realize a reduction in weight in addition to a reduction in height dimension and in width dimension.

### SOLUTIONS TO PROBLEMS

According to one aspect of the present invention, there is provided a railroad vehicle switch including: a vacuum interrupter including a fixed electrode and a movable electrode that comes into contact with or separates from the fixed electrode; a fixed conductor connected to the fixed electrode; a first bushing conductor electrically connected to the fixed conductor; a movable conductor connected to the movable electrode; a second bushing conductor electrically connected to the movable conductor; an air insulation operating rod disposed coaxially with the movable conductor; a solid insulating member being made of a thermosetting resin and covering the vacuum interrupter and the first and second bushing conductors; and a structure member being made of a thermoplastic resin and being joined to a portion of the solid insulating member forming an air insulation space in a peripheral portion of the air insulation operating rod. A part of the air insulation space is formed in a space formed by the solid insulating member made of the thermosetting resin and the structure member made of the thermoplastic resin.

### EFFECTS OF THE INVENTION

According to the present invention, it is possible to provide a railroad vehicle switch of which a product weight can be reduced, and a method for manufacturing the same.

### BRIEF DESCRIPTION OF THE DRAWINGS

Fig. 1 is a plan view illustrating an external shape of a railroad vehicle switch in a first embodiment.
Fig. 2 is a cross-sectional view of the railroad vehicle switch in the first embodiment taken along a plane including a central axis thereof.
Fig. 3 is a cross-sectional view of the railroad vehicle switch in the first embodiment taken along a plane orthogonal to the central axis thereof.
Fig. 4 is a cross-sectional view of a railroad vehicle switch in a second embodiment taken along a plane including a central axis thereof.
Fig. 5 is a cross-sectional view of a railroad vehicle switch in a third embodiment taken along a plane including a central axis thereof.
Fig. 6 is a view illustrating a method for manufacturing a railroad vehicle switch in a fourth embodiment.
Fig. 7 is a cross-sectional view of the railroad vehicle switch in the fourth embodiment taken along a plane including a central axis thereof.

### MODE FOR CARRYING OUT THE INVENTION

Hereinafter, embodiments suitable for carrying out the present invention will be described with reference to the drawings.

### First Embodiment

First, an outline of a railroad vehicle and an outline of a switch to be used for the railroad vehicle which are a premise of the present embodiment will be described.

As described in Patent Document 1, a railroad vehicle is made up of a plurality of vehicles, a high-voltage pull-through cable is disposed on a roof of each vehicle, and the railroad vehicle receives electric power from electric wires via a pantograph connected to the high-voltage pull-through cable. In addition, the high-voltage pull-through cable of each vehicle is connected between the vehicles by a linear joint, and branches in a vehicle underfloor direction by means of a T-branch joint. Then, the T-branch joint and the linear joint form an integral switch. The switch is used in a state where the switch is mounted in a fixing portion of the railroad vehicle.

For example, when a ground fault occurs in a high-voltage pull-through cable of a vehicle, a switch is operated by a command from the outside to open the linear joint, so that a main transformer mounted in a vehicle affected by the ground fault and an electric motor connected thereto are electrically disconnected. At this time, since main transformers of vehicles that are not affected by the ground fault remain connected, operation of the vehicles can be continued using electric motors connected thereto. In addition, a high-voltage cable including a defective part and a sound high-voltage cable can be automatically separated from each other without a worker climbing on a roof of a vehicle.

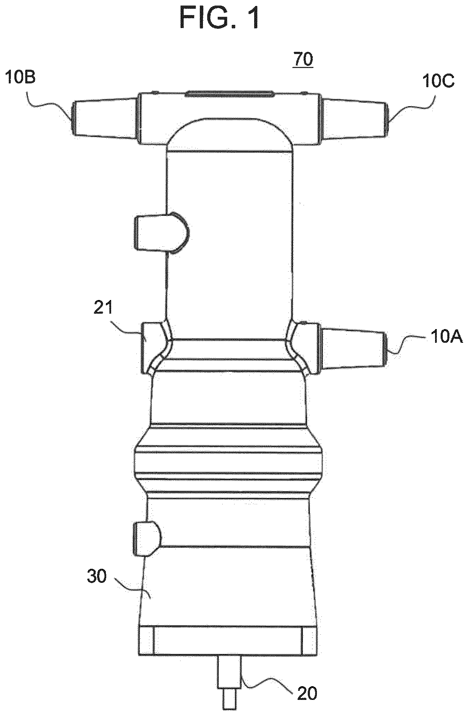

Fig. 1 is a plan view illustrating an external shape of a railroad vehicle switch in which a T-branch joint and a linear joint are integrated in the present embodiment. In Fig. 1, a switch 70 includes electrical connection portions 10A, 10B, and 10C, the electrical connection portions 10B and 10C are electrically connected to each other inside the switch 70, and the electrical connection portions 10B and 10C form a T-branch joint. In addition, a switch portion formed of a fixed electrode and a movable electrode to be described later is provided between the electrical connection portions 10A, 10B, and 10C inside the switch 70, and the electrical connection portions 10A, 10B, and 10C form a linear joint. In addition, although not illustrated, the switch 70 is used in a state where a T-type cable head is connected to the electrical connection portions 10A, 10B, and 10C. In addition, as will be described later in detail, reference sign 20 denotes an air insulation operating rod, reference sign 21 denotes a solid insulating member, and reference sign 30 denotes a structure member.

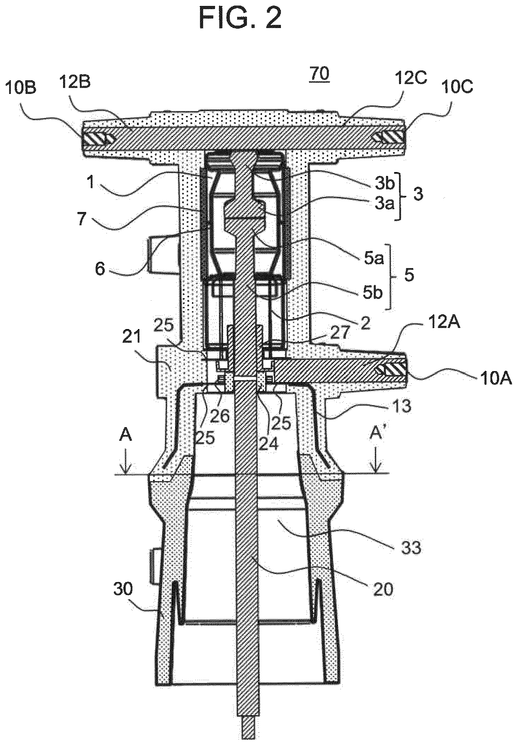

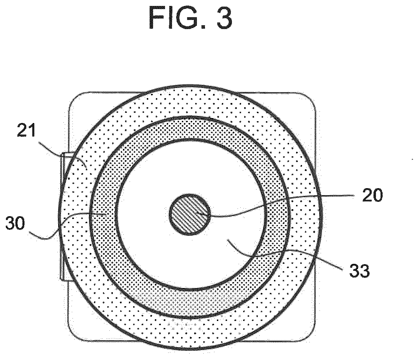

Fig. 2 is a cross-sectional view of the switch 70 of Fig. 1 taken along a plane including a central axis of an air insulation operating rod 20. In addition, Fig. 3 is a cross-sectional view of the switch 70 illustrated in Fig. 2 taken along plane A-A' orthogonal to the central axis of the air insulation operating rod 20.

As illustrated in Fig. 2, the switch 70 includes a fixed electrode 3a, a movable electrode 5a that comes into contact with or separates from the fixed electrode 3a, an arc shield 6 that covers peripheries of the fixed electrode 3a and the movable electrode 5a, a ceramic insulating cylinder 7 having a cylindrical shape and forming a part of an outer container that supports the arc shield 6, and a vacuum interrupter 1 formed of a bellows 2 and the like.

An outer container of the vacuum interrupter 1 is formed by covering both ends of the ceramic insulating cylinder 7 with end plates, and maintains the inside of the outer container in a vacuum state. The fixed electrode 3a is connected to a fixed conductor 3b, and the fixed conductor 3b is led out to the outside of the vacuum interrupter 1, and is electrically connected to bushing conductors 12B and 12C on a fixed conductor 3b side. On the drawings, a combination of the fixed electrode 3a and the fixed conductor 3b may be denoted by reference sign 3.

The movable electrode 5a is connected to a movable conductor 5b, and the movable conductor 5b is led out to the outside of the vacuum interrupter 1, and is electrically connected to a bushing conductor 12A on a movable conductor 5b side. On the drawings, a combination of the movable electrode 5a and the movable conductor 5b may be denoted by reference sign 5. Components such as the vacuum interrupter 1, the bushing conductors 12B and 12C on the fixed conductor 3b side, and the bushing conductor 12A on the movable conductor 5b side are integrally molded and insulated from each other such that outer peripheral portions thereof are covered with a solid insulating member 21 made of a thermosetting resin such as epoxy resin.

The bellows 2 is disposed between the movable conductor 5b and a movable side end plate on a movable side of the vacuum interrupter 1, and the movable conductor 5b is movable while a vacuum state of the vacuum interrupter 1 is maintained. In addition, an adapter 24 is a member that coaxially connects the movable conductor 5b and the air insulation operating rod 20. In addition, reference sign 27 denotes a flexible conductor.

A tip portion of the air insulation operating rod 20 is provided with an electromagnetic operating portion (not illustrated) that operates the air insulation operating rod 20. For example, the electromagnetic operating portion is such that a permanent magnet and an electromagnet are combined with a spring and the energization of a coil forming the electromagnet is turned on and off to generate a driving force. The electromagnetic operating portion operates to move the movable conductor 5b and the air insulation operating rod 20 in a coaxial direction via a bearing 26 supported by a housing 25, the movable conductor 5b and the air insulation operating rod 20 being integrally connected to each other by the adapter 24.

Here, a structure member 30 is brought into contact with and joined to an inner side of the solid insulating member 21 having a cylindrical shape and forming an air insulation space 33. Accordingly, insulation between the vacuum interrupter 1 and the electromagnetic operating portion is secured by the air insulation space 33 formed in a peripheral portion of the air insulation operating rod 20 by the solid insulating member 21 made of a thermosetting resin and the structure member 30 being made of a thermoplastic resin and being joined to the solid insulating member 21. Namely, in order to the insulation, an insulation distance between the vacuum interrupter 1 and the electromagnetic operating portion in the air insulation space 33 is optimized.

In addition, a metal shield 13 used for the purpose of shielding electromagnetic waves, leveling the electric field density, improving the strength, and the like is embedded in a portion of the solid insulating member 21, which forms the air insulation space 33.

As a thermosetting resin used for the solid insulating member 21, a resin material is used which contains epoxy resin, phenol resin, polyester resin, or the like as a main component. In addition, as a thermoplastic resin used for the structure member 30, a resin material is used which contains Polybutylene Terephthalate (PBT) resin, Poly Phenylene Sulfide (PPS) resin, Poly Propylene (PP) resin, Acrylonitrile Butadiene Styrene (ABS) resin, Polystyrene (PS) resin, Poly Ethylene (PE) resin, Polyvinyl Chloride (PVC) resin, Polycarbonate (PC) resin, Polyethyleneterephthalat (PET) resin, Liquid Crystal Polymer (LCP) resin, Polyphenyleneether (PPO) resin, Silicone (Si) resin, or the like as a main component. In addition, a thermosetting resin of the solid insulating member 21 or a thermoplastic resin of the structure member 30 may be filled with fillers. As the fillers, for example, an inorganic material containing a component such as silica, mica, or talc, an organic material containing a component such as carbon or a polymer material, and a metal material containing a component such as copper, aluminum, gold, silver, or iron can be used.

The solid insulating member 21 forms the air insulation space 33 around the air insulation operating rod 20 in addition to being in close contact with and covering the vacuum interrupter 1 and the bushing conductors 12A, 12B, and 12C. In addition, an insulating gas such as dry air or SF6 gas is sealed in the air insulation space 33 formed by the solid insulating member 21 and the structure member 30 being made of a thermoplastic resin and being joined to the solid insulating member 21. Incidentally, although not illustrated, the air insulation space 33 and a space including the electromagnetic operating portion connected to the air insulation operating rod 20 has a sealed structure that is isolated from an external space.

The solid insulating member 21 made of a thermosetting resin is integrally molded with components such as the vacuum interrupter 1 and the bushing conductors 12A, 12B, and 12C in a state where the solid insulating member 21 is in close contact with and covers the components using a casting method in which a mold in which the components are installed in advance is filled with a liquid resin.

Here, since the thermosetting resin used for the solid insulating member 21 has low viscosity, generally, the solid insulating member 21 can be molded at a low pressure of 10 MPa or less. Accordingly, a load can be reduced which is applied to a component such as the vacuum interrupter 1 in which a sliding defect or the like is caused by pressure during molding. Further, since the viscosity is low, non-filling parts such as voids can be prevented from being formed in a peripheral portion of the vacuum interrupter 1 in which the electric field density is high and an insulation defect is not acceptable.

However, the solid insulating member 21 made of a thermosetting resin has a problem that the density is high since the thermosetting resin is filled with fillers such as silica for the purpose of improving the strength, and a problem that the material cost is high because of a complicated resin material formulation in which curing is performed by heating. Further, the solid insulating member 21 requires a long-time curing process in which the resin is cured by heating.

Therefore, in the present embodiment, the vacuum interrupter 1 in which an insulation defect due to voids is not acceptable since the vacuum interrupter 1 is a peripheral portion of members through which current flows and the electric field density is high, and the bushing conductors 12A, 12B, and 12C are covered with the solid insulating member 21 made of a thermosetting resin, and the structure member 30 forming the air insulation space 33 which is unlikely to be affected by voids and is a region other than the vacuum interrupter 1 is made of a thermoplastic resin having low density and low material cost.

The structure member 30 made of a thermoplastic resin is molded by an injection molding process, and is formed by filling a low-temperature mold with a high-temperature resin material and then, by cooling the resin in the mold. For this reason, the thermoplastic resin does not require a long-time curing process for curing the resin.

In addition, a casting device that integrally molds the solid insulating member 21 made of a thermosetting resin with components such as the vacuum interrupter 1 includes a mechanism that reduces pressure in a mold to suppress the generation of voids, a tank that separately stores two liquids such as a main agent forming the thermosetting resin and a curing agent, and a mixing portion that mixes the two liquids, so that the equipment cost is high.

For this reason, when the dimension of the solid insulating member 21 being made of a thermosetting resin and being molded by a casting method is large, large casting equipment needs to be used, and the equipment cost increases, which is a problem. For this reason, the equipment cost can also be reduced by using a part or the entirety of a region of formation of the air insulation space 33 for the structure member 30 made of a thermoplastic resin.

Here, in a joint portion between the solid insulating member 21 made of a thermosetting resin and the structure member 30 made of a thermoplastic resin, the shape of the structure member 30 is made to have the same cylindrical shape as that of the solid insulating member 21, and the structure member 30 is inserted and connected to the inner side of the solid insulating member 21. Incidentally, the solid insulating member 21 may be inserted and connected to an inner side of the structure member 30.

Although not illustrated, the solid insulating member 21 and the structure member 30 may be joined to each other with an adhesive. Joining can be easily performed by using an adhesive, and insulation can also be maintained. Incidentally, joining may be performed using screws, and as the screws, resin screws may be used to improve insulation. In addition, in order to secure insulation in the joint portion and to prevent the outflow of gas from the air insulation space 33, it is desirable that a seal material such as grease, an adhesive, an O-ring providing insulation is applied to the joint portion.

As described above, according to the switch 70 of the present embodiment, the weight can be reduced by using a part of the region of formation of the air insulation space 33 for the structure member 30 being made of a thermoplastic resin and having low density. Further, the material cost and the equipment cost can also be reduced by reducing the amount of use of the solid insulating member 21 made of a thermosetting resin.

### Second Embodiment

In the present embodiment, a structure will be described in which the volume of the solid insulating member 21 is further reduced to prevent the cracking of the solid insulating member 21 during joining to the structure member 30, and to reduce further the weight.

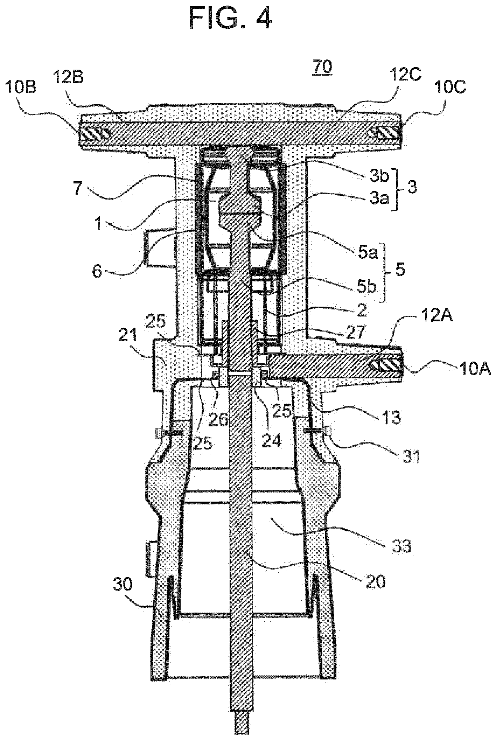

Fig. 4 is a cross-sectional view of a railroad vehicle switch in the present embodiment taken along a plane including the central axis of the air insulation operating rod 20. In Fig. 4, the same configurations as those in Fig. 2 are denoted by the same reference signs, and descriptions thereof will be omitted. The configuration of Fig. 4 is different from that of Fig. 2 in that the joint portion between the solid insulating member 21 and the structure member 30 and the configuration of the metal shield 13 are different.

In the first embodiment, the structure has been described in which the metal shield 13 is embedded in the solid insulating member 21. In addition, the structure has been illustrated in which the structure member 30 is in contact with and joined to the inner side of the solid insulating member 21 having a cylindrical shape and forming the air insulation space 33. However, a thermosetting resin forming the solid insulating member 21 is hard, and the solid insulating member 21 is likely to crack because of friction or impact during joining to the structure member 30, which is a problem.

Therefore, the present embodiment adopt a structure in which the volume of the solid insulating member 21 is further reduced to prevent the cracking of the solid insulating member 21 during joining to the structure member 30, and to reduce further the weight. Namely, as illustrated in Fig. 4, the metal shield 13 is formed to be partially exposed from the solid insulating member 21, and the structure member 30 is joined in a state where the structure member 30 is in contact with the exposed metal shield 13.

According to the structure of the present embodiment, since the volume of the solid insulating member 21 can be more reduced and the proportion of the structure member 30 can be more increased by the amount of exposure of the metal shield than in the configuration of Fig. 2, a further weight reduction and a further cost reduction can be realized, and a joint portion of the solid insulating member 21 is protected by the metal shield 13. Therefore, the solid insulating member 21 can be prevented from cracking during joining to the structure member 30.

Incidentally, Fig. 4 illustrates a structure in which fastening is performed using self-tap screws 31 from the outside of the structure member 30 forming the air insulation space 33; however, joining using screws and bolts or fastening using an adhesive can also be performed. In addition, as the material of the screw, a resin can also be used to improve insulation.

In addition, in order to secure insulation in the joint portion and to prevent the outflow of gas from the air insulation space 33, it is desirable that a seal material such as grease, an adhesive, an O-ring providing insulation is applied to the joint portion.

### Third Embodiment

In the present embodiment, a structure will be described in which the volume of the solid insulating member 21 is further reduced to reduce more the weight and the cost than in the structure of Fig. 2.

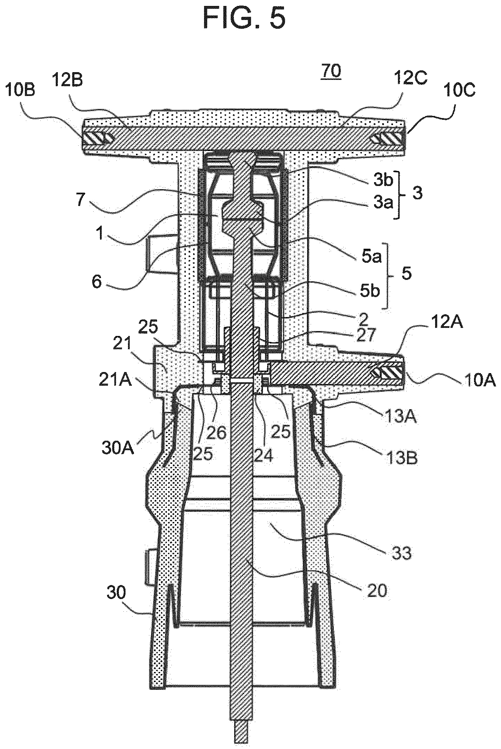

Fig. 5 is a cross-sectional view of a railroad vehicle switch in the present embodiment taken along a plane including the central axis of the air insulation operating rod 20. In Fig. 5, the same configurations as those in Fig. 4 are denoted by the same reference signs, and descriptions thereof will be omitted. The configuration of Fig. 5 is different from that of Fig. 4 in that the metal shield 13 is divided into a solid insulating member 21 side and a structure member 30 side.

In the present embodiment, as illustrated in Fig. 5, the metal shield 13 is divided, a metal shield 13A on the solid insulating member 21 side and a metal shield 13B on the structure member 30 side are installed, and a part or the entirety of a region of formation of the air insulation space 33 having a cylindrical shape is used for the structure member 30.

The metal shield 13A in the solid insulating member 21 forming the air insulation space 33 is formed to be partially exposed on an inner periphery side of the solid insulating member 21, and the metal shield 13B in the structure member 30 is formed to be partially exposed on an outer periphery side of the structure member 30. Then, joining is performed in a state where at least parts of the metal shield 13A partially exposed on the inner periphery side of the solid insulating member 21 and of the metal shield 13B partially exposed on the outer periphery side of the structure member 30 are in contact with each other.

In such a manner, according to the structure in which the metal shields are in contact with and joined to each other, cracking or wear deformation during joining of the solid insulating member 21 and the structure member 30 can be prevented, and the volume of the structure member 30 is more increased and the volume of the solid insulating member 21 is more reduced by the amount of embedding of the metal shield 13B in the structure member 30 than in the configuration of Fig. 4. Therefore, the weight and the cost can be further reduced.

Incidentally, Fig. 5 illustrates a structure in which a protrusion 30A of the structure member 30 is inserted into a recess 21A of the solid insulating member 21 and joining is performed; however, a protrusion of the solid insulating member 21 may be inserted into a recess of the structure member 30 and joining may be formed.

In addition, although not illustrated in Fig. 5, a structure is adopted in which the solid insulating member 21 and the structure member 30 are fastened to each other with an adhesive. In order to secure shielding properties, it is desirable that a conductive material such as a conductive adhesive or a conductive grease is applied to a joint portion between the metal shields. In addition, fastening can also be performed using self-tap screws or screws and bolts, and as the material of the screw, a resin can also be used to improve insulation.

In addition, in order to secure insulation in the joint portion and to prevent the outflow of gas from the air insulation space 33, it is desirable that a seal material such as grease, an adhesive, an O-ring providing insulation is applied to the joint portion.

### Fourth Embodiment

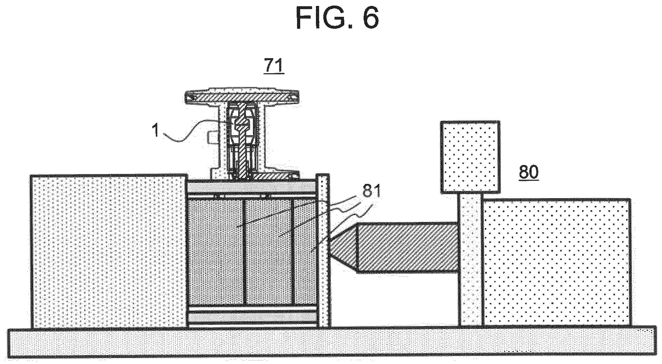

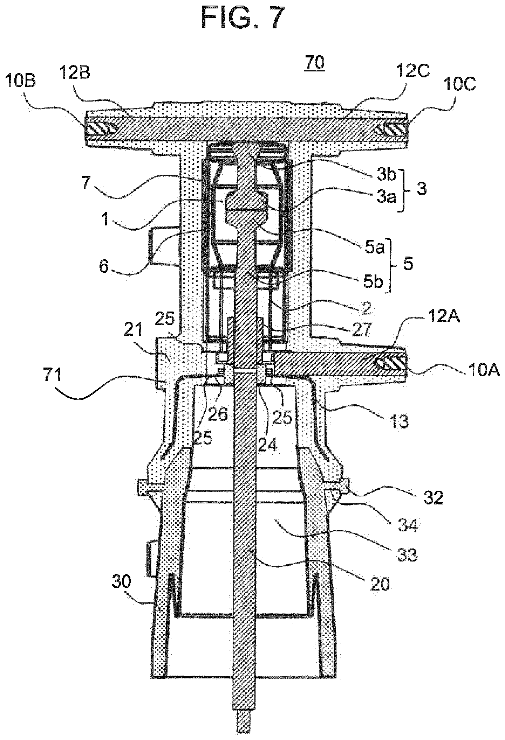

In the present embodiment, a method for manufacturing a railroad vehicle switch will be described. Fig. 6 is a view describing a method for manufacturing a railroad vehicle switch in the present embodiment. In addition, Fig. 7 is a cross-sectional view of a railroad vehicle switch manufactured by the manufacturing method in the present embodiment which is taken along a plane including the central axis of the air insulation operating rod 20.

In Fig. 6, a component 71 is formed in advance in which components such as the vacuum interrupter 1, the bushing conductors 12B and 12C on the fixed conductor 3b side, and the bushing conductor 12A on the movable conductor 5b side are integrally molded with the solid insulating member 21 made of a thermosetting resin such as epoxy resin. The structure member 30 is formed and a fastening portion 32 to be described later of the structure member 30 and the solid insulating member 21 is formed by filling a mold 81 of an injection molding machine 80 with a thermoplastic resin melted in an injection molding process in a state where the component 71 is installed in the mold.

Incidentally, although not illustrated, a placing piece or the like that is a mold component is installed in the air insulation space 33 such that this portion is not filled with the resin.

Here, when the component 71 is installed in the mold 81 for injection molding, molding is performed in a state where the portion of the vacuum interrupter 1 is installed outside the mold 81 and is not clamped by the mold 81. Accordingly, a load can be reduced which may be applied to the vacuum interrupter 1 to cause a sliding defect or the like because of a load of the mold 81 during clamping.

In Fig. 7, a structure will be described in which the component 71 is fastened to the structure member 30 by injection molding. In Fig. 7, the same configurations as those in Fig. 2 are denoted by the same reference signs, and descriptions thereof will be omitted. The configuration of Fig. 7 is different from that of Fig. 2 in that a hollow portion 34 and the fastening portion 32 are provided.

As illustrated in Fig. 7, the hollow portion 34 is partially provided in the component 71, and the fastening portion 32 is formed by filling the hollow portion 34 of the component 71 with a thermoplastic resin from the inside to the outside in the injection molding process.

The solid insulating member 21 and the structure member 30 can be fastened to each other by forming the fastening portion 32 in such a manner. In addition, although not illustrated, a seal material such as grease is applied to a joint surface between the structure member 30 and the solid insulating member 21 in advance, so that insulation in the joint portion can be secured and the outflow of gas from the air insulation space 33 can be prevented.

According to the manufacturing method and the structure of the present embodiment, since an adhesion or screwing process is not required and relevant components are also not required because of facilitation of a joining and fastening process of the solid insulating member 21 and the structure member 30, the cost can be reduced, and since the fastening portion is formed in a liquid state, there is no solid to solid contact, and cracking or wear deformation in the joint surface between the solid insulating member 21 and the structure member 30 can be prevented.

Incidentally, in the present embodiment, the structure in which the metal shield 13 of the first embodiment is embedded in the solid insulating member 21 has been illustrated as an example; however, this manufacturing method and this structure can also be used for fastening in the second and third embodiments.

In addition, the main component of the adhesive illustrated above is a polymer compound, and the synthetic polymer compound contains a component of a synthetic resin such as melamine resin, urea resin, phenol resin, vinyl acetate resin, ethylene vinyl acetate resin, or epoxy resin, or a component of a synthetic rubber such as chloroprene rubber, nitrile rubber, styrene butadiene rubber, or silicone rubber.

In addition, the main component of grease is a mineral oil or a synthetic oil, and the synthetic oil contains a component of synthetic hydrocarbon oil, ester oil, silicone oil, fluorine oil, phenyl ether oil, or polyglycol oil.

The embodiments have been described above; however, the present invention is not limited to the above embodiments and includes various modification examples. For example, the above embodiments have been described in detail to facilitate understanding of the present invention, and the present invention is not necessarily limited to including all of the described configurations. In addition, a part of a configuration of an embodiment can be replaced with a configuration of another embodiment, and a configuration of another embodiment can be added to a configuration of an embodiment. In addition, other configurations can be added to, removed from, or replaced with a part of the configuration of each embodiment.

### REFERENCE SIGNS LIST

- 1: Vacuum interrupter
- 2, 2A: Bellows
- 3a: Fixed electrode
- 3b: Fixed conductor
- 5a: Movable electrode
- 5b: Movable conductor
- 6: Arc shield
- 7: Ceramic insulating cylinder
- 10A, 10B, 10C: Electrical connection portion
- 12A, 12B, 12C: Bushing conductor
- 13, 13A, 13B: Metal shield
- 20: Air insulation operating rod
- 21: Solid insulating member
- 21A: Recess of solid insulating member 21
- 24: Adapter
- 25: Housing
- 26: Bearing
- 27: Flexible conductor
- 30: Structure member
- 30A: Protrusion of structure member 30
- 31: Self-tap screw
- 32: Fastening portion
- 33: Air insulation space
- 34: Hollow portion
- 70: Switch

## Claims

1. A railroad vehicle switch comprising:
a vacuum interrupter including a fixed electrode and a movable electrode that comes into contact with or separates from the fixed electrode;
a fixed conductor connected to the fixed electrode;
a first bushing conductor electrically connected to the fixed conductor;
a movable conductor connected to the movable electrode;
a second bushing conductor electrically connected to the movable conductor;
an air insulation operating rod disposed coaxially with the movable conductor;
a solid insulating member being made of a thermosetting resin and covering the vacuum interrupter and the first and second bushing conductors; and
a structure member being made of a thermoplastic resin and being joined to a portion of the solid insulating member forming an air insulation space in a peripheral portion of the air insulation operating rod,
wherein a part of the air insulation space is formed in a space formed by the solid insulating member made of the thermosetting resin and the structure member made of the thermoplastic resin.

2. The railroad vehicle switch according to claim 1, further comprising:
a metal shield embedded in the solid insulating member,
wherein the metal shield is formed to be partially exposed from the solid insulating member, and the structure member made of the thermoplastic resin is joined in a state where the structure member is in contact with the exposed metal shield.

3. The railroad vehicle switch according to claim 1,
wherein a first metal shield embedded in the solid insulating member is provided, and the first metal shield is formed to be partially exposed from the solid insulating member,
a second metal shield embedded in the structure member made of the thermoplastic resin is provided, and the second metal shield is formed to be partially exposed from the structure member, and
a partially exposed portion of the first metal shield and a partially exposed portion of the second metal shield are brought into contact with each other, and the solid insulating member and the structure member are joined to each other.

4. The railroad vehicle switch according to claim 1,
wherein a seal material is applied to a joint surface between the solid insulating member and the structure member.

5. The railroad vehicle switch according to claim 3,
wherein a conductive material is applied to a joint surface between the metal shields.

6. The railroad vehicle switch according to claim 1,
wherein the solid insulating member and the structure member are fastened to each other with a resin screw.

7. The railroad vehicle switch according to claim 1,
wherein the solid insulating member and the structure member are fastened to each other with an adhesive.

8. A method for manufacturing a railroad vehicle switch, the method comprising:
a step of forming a component that is integrally molded in a state where a vacuum interrupter including a fixed electrode and a movable electrode that comes into contact with or separates from the fixed electrode, a first bushing conductor to which the fixed electrode is electrically connected, and a second bushing conductor to which the movable electrode is electrically connected are covered with a solid insulating member made of a thermosetting resin; and
a step of forming a structure member by filling a mold of an injection molding machine with a thermoplastic resin melted in an injection molding process in state where the component is installed in the mold,
wherein the solid insulating member and the structure member are fastened to each other by forming a fastening portion of the solid insulating member and the structure member.

9. The method for manufacturing a railroad vehicle switch according to claim 8,
wherein when the component is installed in the mold of the injection molding machine, a portion of the vacuum interrupter is installed outside the mold.
